# EUROPEAN PATENT APPLICATION

(11) **EP 4 693 838 A1**
(43) Date of publication of application: **11.02.2026**
(21) Application number: 24791764.4
(22) Date of filing: 07.03.2024
(51) Int. Cl.: H02K 3/50

(54) **STATOR ASSEMBLY, ELECTRIC MOTOR AND WASHING APPARATUS**

(30) Priority: 21.04.2023 CN 202310439170
(71) Applicant: Huai'An Welling Motor Manufacturing Co., Ltd., Huai'an, Jiangsu 223005 (CN)
(72) Inventor: ZHAO, Yunsheng, Jiangsu 223005 (CN); GUO, Bingchun, Jiangsu 223005 (CN); SHI, Zhifeng, Jiangsu 223005 (CN)
(74) Representative: RGTH
(86) International application number: PCT/CN2024/080550
(87) International publication number: WO 2024/217176

(57) **Abstract**

A stator assembly (1000), an electric motor and a washing apparatus are disclosed. The stator assembly (1000) includes a stator core (100), an insulating frame (200) mounted on the stator core (100), and a multi-phase winding (300) wound around the insulating frame (200). Each phase of the winding (300) includes a plurality of coils spaced apart along a circumferential direction of the stator core (100), and the coils in each phase of the winding (300) are connected through a cross-over wire (310). The cross-over wires (310) are arranged in the circumferential direction of the stator core (100). The insulating frame (200) is provided with a plurality of limiting portions (400), which are arranged at intervals in the circumferential direction of the stator core (100) and are configured to limit the cross-over wires (310) in the radial direction of the stator core (100).

## Description

### CROSS-REFERENCE TO RELATED APPLICATION

The present disclosure claims priority to Chinese Patent Application No. 202310439170.9, entitled "STATOR ASSEMBLY, ELECTRIC MOTOR, AND WASHING APPARATUS" and filed on April 21, 2023, the entire contents of which are incorporated herein by reference.

### TECHNICAL FIELD

The present disclosure relates to the field of electric motor technologies, and in particular, to a stator assembly, an electric motor, and a washing apparatus.

### BACKGROUND

To improve a winding slot fill factor of an electric motor, a stator assembly employs a strip-shape or segmented stator core. A winding is first wound in a linearly unfolded state, after which the stator core is rolled into an annular shape. Because a cross-over wire exists between adjacent coils of the winding, a distance between two ends of the cross-over wire after the stator core is formed in a rolled shape is less than its length in the linear state. Consequently, the curled cross-over wire becomes slack and is prone to detaching from the insulating frame, compromising stability of the winding.

### SUMMARY

The present disclosure aims to at least partially resolve one of the technical problems existing in the existing technology. To this end, the present disclosure provides a stator assembly, an electric motor comprising the stator assembly, and a washing apparatus.

According to a first aspect of the present disclosure, an embodiment provides a stator assembly, comprising a stator core, an insulating frame disposed on the stator core, and a multi-phase winding wound around the insulating frame. Each phase of the winding comprises a plurality of coils disposed at an interval along a circumferential direction of the stator core, and the coils in each phase of the winding are interconnected by a cross-over wire extending along the circumferential direction of the stator core. The insulating frame is provided with a plurality of limiting portions disposed at an interval along the circumferential direction of the stator core and configured to limit the cross-over wire along a radial direction of the stator core.

According to some embodiments of the present disclosure, the plurality of limiting portions are a plurality of limiting arms formed on the insulating frame. One end of the limiting arm is connected to the insulating frame, the other end of the limiting arm extends along a height direction of the stator core. A wall surface of the limiting arm facing away from the winding abuts against the cross-over wire.

According to some embodiments of the present disclosure, the wall surface is provided with a first protrusion located at an end of the limiting arm distal from the insulating frame.

According to some embodiments of the present disclosure, the wall surface is provided with a second protrusion spaced apart from the first protrusion along a height direction of the limiting arm. The cross-over wire is positioned between the first protrusion and the second protrusion.

According to some embodiments of the present disclosure, the first protrusion and the second protrusion are staggered along the height direction of the limiting arm.

According to some embodiments of the present disclosure, one end of the limiting arm connected to the insulating frame is provided with a first wire-retaining portion, the other end of the limiting arm is provided with a second wire-retaining portion extending along the circumferential direction of the stator core. One end of the cross-over wire is bent to form a first wire segment abutting against the first wire-retaining portion of one of the limiting arms, the other end of the cross-over wire is bent to form a second wire segment abutting against the second wire-retaining portion of another one of the limiting arms.

According to some embodiments of the present disclosure, at least one of the limiting arms is located between the first wire segment and the second wire segment to limit a wire portion between the first wire segment and the second wire segment.

According to some embodiments of the present disclosure, the insulating frame comprises a plurality of frame units disposed along the circumferential direction of the stator core. Each of the frame units is provided with a limiting arm. The first protrusion and the second protrusion are disposed adjacent to the second wire-retaining portion. The second wire-retaining portion is disposed toward an adjacent frame unit, such that the first protrusion, the second protrusion, and the frame unit are staggered along the height direction of the stator core.

According to some embodiments of the present disclosure, the frame unit is provided with a winding slot and a boss, and the boss is located on a side of the frame unit away from the winding slot. The limiting arm is connected to one end of the boss close to the winding slot.

According to some embodiments of the present disclosure, the insulating frame, the boss, and the limiting arm are integrally formed.

According to a second aspect of the present disclosure, an embodiment provides an electric motor, comprising the stator assembly in the foregoing embodiments of the first aspect.

The electric motor in this embodiment of the present disclosure has at least the following beneficial effects.

The electric motor utilizes the stator assembly described above. By limiting the cross-over wire along the radial direction of the stator core via the limiting portions, the cross-over wire remains taut after the stator assembly is rolled into an annular shape. In this way, the cross-over wire is not prone to becoming slack, thereby avoiding a case where the cross-over wire is detached from the insulating frame, improving stability of the winding, and allowing the electric motor to operate more reliably to be adapted for a washing apparatus such as a laundry machine.

According to a third aspect of the present disclosure, an embodiment provides a washing apparatus, comprising the electric motor in the foregoing embodiment of the second aspect.

Other features and advantages of the present disclosure are set forth in the following specification, and become partly clear from the specification, or learned by implementing the present disclosure.

### BRIEF DESCRIPTION OF DRAWINGS

FIG. 1 is a schematic structural diagram of a stator assembly in a linear state according to an embodiment of the present disclosure;
FIG. 2 is a schematic structural diagram of a stator assembly rolled into an annular shape according to an embodiment of the present disclosure;
FIG. 3 is a partially schematic structural diagram of the stator assembly in FIG. 1;
FIG. 4 is a partially schematic structural diagram of the stator assembly in FIG. 2;
FIG. 5 is a schematic structural diagram of a frame unit and a limiting arm according to an embodiment of the present disclosure; and
FIG. 6 is a schematic structural diagram of a frame unit and a limiting arm according to another embodiment of the present disclosure.

Reference numerals as followings:
stator assembly 1000;
stator core 100;
insulating frame 200; frame unit 210; first limiting plate 211; second limiting plate 212; winding slot 213; boss 214; fixing slot 215;
winding 300; cross-over wire 310; first wire segment 311; second wire segment 312; and
limiting portion 400; limiting arm 410; first protrusion 411; second protrusion 412; first wire-retaining portion 413; second wire-retaining portion 414.

### DETAILED DESCRIPTION

The following describes embodiments in detail with reference to the drawings, wherein identical or similar reference numerals denote identical or similar elements or elements with identical or similar functions. The embodiments described herein are illustrative only and shall not be construed as limiting the application.

In the description of this application, directional terms (e.g., "up," "down," "axial," "circumferential," "radial") are based on orientations shown in the drawings for clarity and simplicity, and do not imply that the referenced apparatus must have a specific orientation or be constructed/operated in a specific orientation.

In this application, terms "first" and "second" are used solely to distinguish technical features and do not imply relative importance, quantity, or sequence.

Terms such as "disposed," "mounted," and "connected" should be interpreted broadly, with specific meanings determinable by those skilled in the art based on the technical scheme.

Embodiments are described below with reference to the drawings. The described embodiments represent part, not all, embodiments of this application.

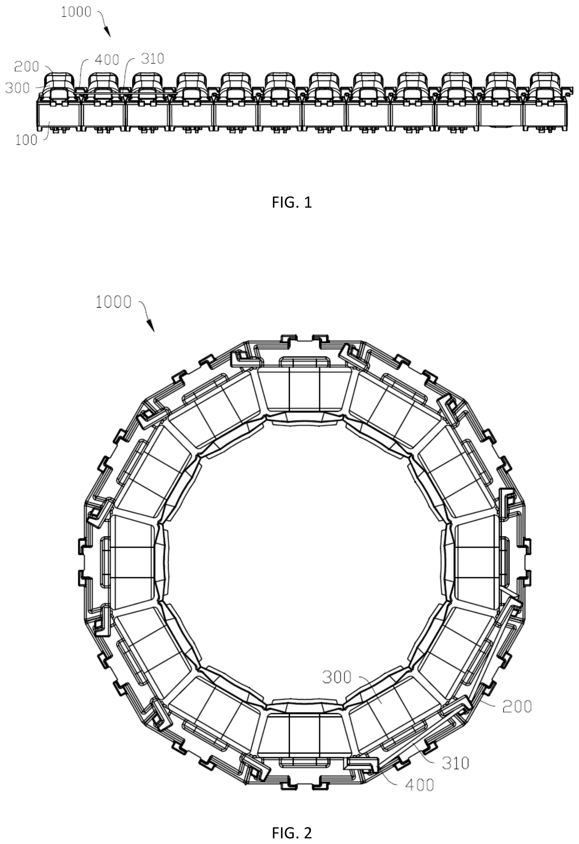

Referring to FIG. 1 and FIG. 2, an embodiment of the present disclosure provides a stator assembly 1000, comprising a stator core 100, an insulating frame 200, and a winding 300. The insulating frame 200 is disposed on the stator core 100. In this embodiment, a segmented stator core 100 is used. The winding 300 is a three-phase winding 300 wound around the insulating frame 200, which electrically isolates the winding 300 from the stator core 100 to ensure a better insulation performance. The stator assembly 1000 may be rolled into an annular shape by connecting and joining its ends. FIG. 1 shows a structure of the stator assembly 1000 in a linear state, and FIG. 2 shows a structure of the stator assembly 1000 rolled into an annular shape.

Referring to FIG. 1 and FIG. 2, the insulating frame 200 in this embodiment of the present disclosure comprises a plurality of frame units 210 embedded in the stator core 100. Each phase of the winding 300 comprises a plurality of coils spaced apart along a circumferential direction of the stator core 100. Each frame unit 210 is wound with one coil. Because adjacent coils in a same phase of the winding 300 are spaced apart, the winding 300 is provided with a plurality of cross-over wires 310 extending along the circumferential direction of the stator core 100. The cross-over wire 310 is configured to connect the adjacent coils, such that the plurality of coils are joined and connected to form the winding 300.

In an embodiment, the three-phase winding 300 comprises twelve coils (four coils per phase). Four of the twelve coils are connected in series in Phase A winding, another four coils are connected in series in Phase B winding, and the remaining four coils are connected in series in Phase C winding. Terminals of the three-phase winding 300 are joined to form a star connection. It can be understood that the four coils in the Phase A winding are sequentially connected by a cross-over wire 310, the four coils in the Phase B winding are sequentially connected by a cross-over wire 310, the four coils in the Phase C winding are sequentially connected by a cross-over wire 310, and the cross-over wire 310 in each phase of the winding 300 extends along the circumferential direction of the stator core 100. This is merely an example herein, a quantity of coils of the three-phase winding 300 is not limited to twelve, and may alternatively be nine, fifteen or more, depending on a specific application requirement. Compared with a single-phase electric motor, a three-phase electric motor has advantages of higher power, more stable operation, and longer service life, which can better meet the demands of a laundry machine and offer a better washing effect.

Referring to FIG. 1, it can be understood that the winding 300 is wound on the linear stator core 100. Once winding is completed, the stator core 100 is rolled into the stator assembly 1000 in the annular shape. Because a circumferential length of the cross-over wire 310 after rolling is less than its length in the linear state, the rolled cross-over wire 310 becomes slack, and is prone to detaching from the insulating frame 200, compromising stability of the winding 300.

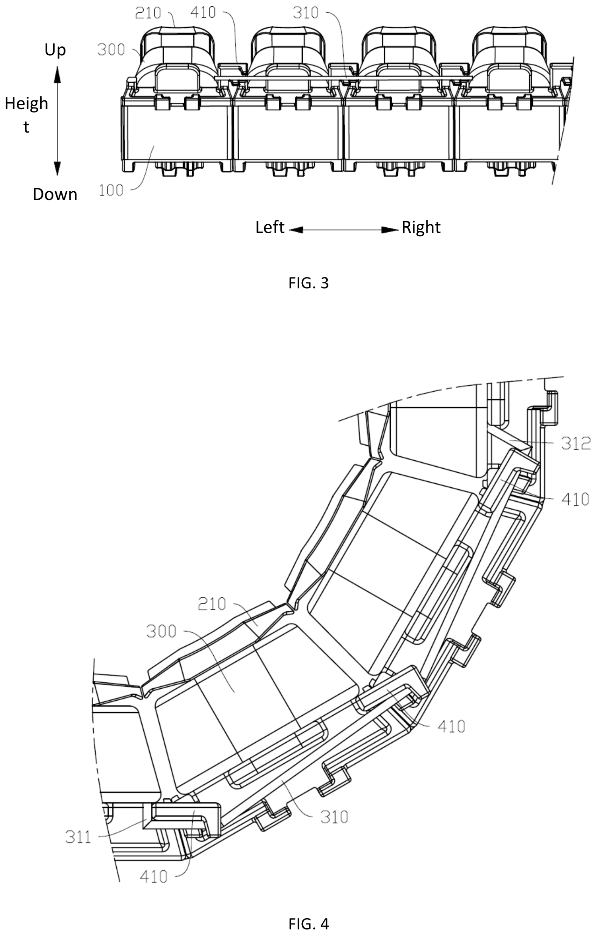

To resolve the foregoing problems, referring to FIG. 3 and FIG. 4, the insulating frame 200 is provided with a plurality of limiting portions 400 spaced apart along the circumferential direction of the stator core 100. The limiting portions 400 may be disposed adjacent to a position where the cross-over wire 310 of the winding 300 is led out or along a routing path of the cross-over wire 310. The limiting portion 400 may be of a structure such as a wire-retaining slot or a wire-retaining post. By utilizing the limiting portions 400 to limit the cross-over wires 310 along a radial direction of the stator core 100, positions of the cross-over wires 310 are constrained. In this way, when the winding 300 is manufactured and the stator assembly 1000 is rolled into the annular shape, the limiting portions 400 may limit movement of the cross-over wires 310 along the radial direction. This can increase an arc radius of the cross-over wire 310 during bending, and maintain the cross-over wire 310 in tension, such that the cross-over wire 310 is not prone to becoming slack, thereby avoiding a case where the cross-over wire 310 is detached from the insulating frame 200, improving the stability of the winding 300, and allowing the electric motor to operate more reliably.

Referring to FIG. 3, the limiting portion 400 in this embodiment of the present disclosure is a limiting arm 410 formed at an upper end of the insulating frame 200. One end of the limiting arm 410 is connected to the insulating frame 200, and the other end of the limiting arm 410 extends upward along a height direction of the stator core 100. After being led out from the winding 300, the cross-over wire 310 is wound around the limiting arm 410. A wall surface of the limiting arm 410 facing away from the winding 300 abuts against the cross-over wire 310, thereby limiting the cross-over wire 310 outwards along the radial direction. The height direction of the stator core 100 is an up-down direction shown in FIG. 3.

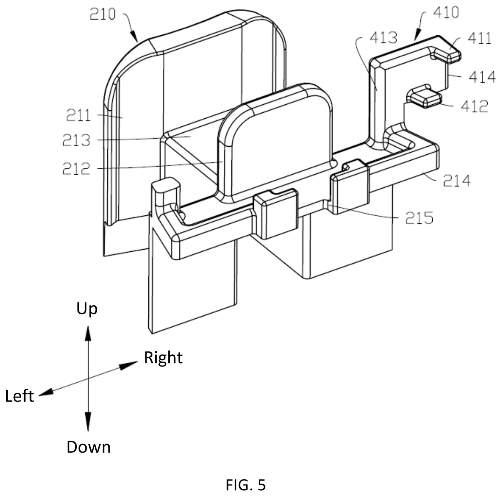

Referring to FIG. 5, it can be understood that each frame unit 210 in this embodiment is provided with a limiting arm 410. One of the frame units 210 is used as an example. A winding slot 213 for receiving and winding a coil is provided on a side of the frame unit 210 close to a center of the stator core 100. The limiting arm 410 is located on a side of the frame unit 210. After being led out from the frame unit 210, the wire 310 of the coil is limited by the limiting arm 410, then cross over to another frame unit 210 for routing.

It may be understood with reference to FIG. 3, the cross-over wire 310 is led out from a coil of one frame unit 210 and then routed across one or more frame units 210. In the example shown in FIG. 3, the wire 310 crosses over two frame units 210. A specific routing mode is determined based on a quantity of windings 300. Because each frame unit 210 in this embodiment is provided with a limiting arm 410, when the cross-over wire 310 is routed across frame units 210, the limiting arm 410 on the frame unit 210 at a corresponding position may limit the cross-over wire 310.

In combination with FIG. 4, it can be understood that two ends and a middle position of a cross-over wire 310 are respectively limited by a limiting arm 410. As the stator assembly 1000 being rolled, the cross-over wire 310 is rolled together with the stator core 100 due to limitation by the limiting arm 410 to the cross-over wire 310 along the radial direction. In this way, an arc radius of the cross-over wire 310 in a bent state may be increased, such that the cross-over wire 310 is maintained in tension and not prone to becoming slack. Since the cross-over wire 310 is taut, it is not prone to detaching from the insulating frame 200. That is, the limiting arm 410 offers a function of maintaining the cross-over wire 310 in tension, and the limiting arm 410 may also be understood as a tensioning arm.

Referring to FIG. 5, in this embodiment of the present disclosure, the wall surface of the limiting arm 410 facing away from the winding 300 is provided with a first protrusion 411, and the first protrusion 411 is located at an end of the limiting arm 410 distal from the insulating frame 200. That is, the first protrusion 411 is provided at the upper end of the limiting arm 410, and the first protrusion 411 protrudes from the wall surface. When the cross-over wire 310 abuts against the wall surface of the limiting arm 410, the cross-over wire 310 may be further limited by the first protrusion 411 to prevent the cross-over wire 310 from being detached from the upper end of the limiting arm 410.

It should be noted that a height of the first protrusion 411 protruding from the wall surface needs to be greater than a wire diameter of the cross-over wire 310 to ensure that the cross-over wire 310 does not override the first protrusion 411, to be detached from the limiting arm 410, and a specific height may be set according to an actual application requirement. In an embodiment of FIG. 5, one first protrusion 411 is shown for example, and a quantity of first protrusions 411 may alternatively be two or more, and the two or more first protrusions 411 may be spaced apart along an upper edge of the limiting arm 410.

Referring to FIG. 5, in this embodiment of the present disclosure, the wall surface of the limiting arm 410 facing away from the winding 300 is further provided with a second protrusion 412, and the second protrusion 412 is spaced apart from the first protrusion 411 along a height direction of the limiting arm 410, such that the cross-over wire 310 may be located between the first protrusion 411 and the second protrusion 412. The second protrusion 412 may be disposed close to a bottom end of the limiting arm 410 and protrudes from the wall surface, and a height of the second protrusion 412 protruding from the wall surface needs to be greater than the wire diameter of the cross-over wire 310, to ensure that the cross-over wire 310 does not override the second protrusion 412. Through cooperation of the first protrusion 411 and the second protrusion 412, movement of the cross-over wire 310 along the height direction of the limiting arm 410 may be limited, to ensure that the cross-over wire 310 is in maintained in tension, and significantly reduce a risk of detachment of the cross-over wire 310 from the limiting arm 410.

It should be noted that the first protrusion 411, the second protrusion 412, and the limiting arm 410 are integrally injection-molded as a single-piece structure, which facilitates manufacturing and is conducive to reducing costs.

Referring to FIG. 5, in this embodiment, the first protrusion 411 and the second protrusion 412 are staggered along the height direction of the limiting arm 410. To be specific, the first protrusion 411 is not located directly above the second protrusion 412, and the second protrusion 412 is not located directly below the first protrusion 411. This facilitates demolding of an injection mold along the up-down direction, simplifies fabrication of the mold, and reduces manufacturing costs.

It should be noted that, because the winding 300 is further provided with a lead wire, the lead wire does not need to cross over the frame units 210. The lead wire may be led out from one of the coils and limited by the limiting arm 410, and then connected to another adjacent coil, that is, the limiting arm 410 may limit the cross-over wire 310 and the lead wire that does not need to cross over the frame units. A distance between the first protrusion 411 and the second protrusion 412 may satisfy a dimensional requirement of accommodating the cross-over wire 310 and the lead wire, thereby preventing the cross-over wire 310 and the lead wire from being detached from the limiting arm 410.

Referring to FIG. 4, in this embodiment of the present disclosure, it can be understood that, because the two ends of the cross-over wire 310 need to be bent and connected to a coil at corresponding positions, after the winding 300 is wound, one end of the cross-over wire 310 is bent to form a first wire segment 311, and the other end of the cross-over wire 310 is bent to form a second wire segment 312.

With reference to FIG. 5, it can be understood that the end of the limiting arm 410 connected to the frame unit 210 is provided with a first wire-retaining portion 413, the other end of the limiting arm 410 is provided with a second wire-retaining portion 414, and the second wire-retaining portion 414 extends along the circumferential direction of the stator core 100. Specifically, the second wire-retaining portion 414 extends to an outer side of the frame unit 210, such that the second wire-retaining portion 414 is close to an adjacent frame unit 210. When the cross-over wire 310 is being wound, the first wire segment 311 of the cross-over wire 310 is led out from an adjacent limiting arm 410, the first wire segment 311 abuts against the first wire-retaining portion 413, and after the cross-over wire 310 crosses over the frame units, the second wire segment 312 abuts against a second wire-retaining portion 414 of a limiting arm 410 on another frame unit 210. That is, the cross-over wire 310 originates at the first wire-retaining portion 413 of one limiting arm 410 and terminates at the second wire-retaining portion 414 of another limiting arm 410, such that the first wire segment 311 and the second wire segment 312 are limited. Alternatively, by way of example only, the cross-over wire 310 may originate at the second wire-retaining portion 414 and terminate at a first wire-retaining portion 413 of another limiting arm 410, depending on a specific winding mode of the winding 300.

It should be noted that, in this embodiment, the limiting arm 410 may be of a plate-like structure. The first wire-retaining portion 413 and the second wire-retaining portion 414 may be understood as two side edges of the plate along the circumferential direction of the stator core 100, and the two side edges are provided with chamfers to avoid damage to the cross-over wire 310 during limitation.

Referring to FIG. 4, in this embodiment, the first wire segment 311 and the second wire segment 312 of the cross-over wire 310 are respectively limited by the limiting arms 410, and another limiting arm 410 is further used to limit a wire portion of the cross-over wire 310 between the first wire segment 311 and the second wire segment 312, to ensure that the cross-over wire 310 is maintained in tension, thereby effectively avoiding a problem that the cross-over wire 310 becomes slack and is detached from the insulating frame 200. This is merely an example herein. In some embodiments, two or more limiting arms 410 may be disposed between the first wire segment 311 and the second wire segment 312 for support and limitation, which may be set according to a length of the cross-over wire 310, to ensure stability of the cross-over wire 310.

Referring to FIG. 5, it can be understood that each frame unit 210 is provided with a boss 214. The boss 214 is disposed along a direction away from the winding 300, and the limiting arm 410 is connected to a right side of the boss 214 and is located at a position close to the winding slot 213. The frame unit 210 further comprises a first limiting plate 211 and a second limiting plate 212, the winding slot 213 is defined between the first limiting plate 211 and the second limiting plate 212, and the first limiting plate 211 is closer to the center of the stator core 100 than the second limiting plate 212. The boss 214 is disposed on a side of the second limiting plate 212 facing away from the winding slot 213, the limiting arm 410 is spaced apart from the second limiting plate 212, and the cross-over wire 310 or the lead wire may be led out from a gap between the limiting arm 410 and the second limiting plate 212, thereby allowing the cross-over wire 310 and the lead wire being limited and routed rapidly.

Referring to FIG. 5, it should be noted that the limiting arm 410 is connected to the frame unit 210 through the boss 214, such that the limiting arm 410, the boss 214, and the insulating frame 200 may be integrally injection-molded as a single piece, the structure of the limiting arm 410 is more stable and reliable, and manufacturing costs are reduced. In addition, the boss 214 may be further provided with a fixing slot 215 that is convenient for winding to improve assembly efficiency.

Referring to FIG. 5, in some embodiments, the first protrusion 411 and the second protrusion 412 are disposed close to the second wire-retaining portion 414. The first protrusion 411 is disposed at an edge of the second wire-retaining portion 414, and the first protrusion 411 is spaced apart from the second protrusion 412 along the height direction. The second wire-retaining portion 414 is disposed toward the adjacent frame unit 210. In other words, the second wire-retaining portion 414 may protrude from the frame unit 210, such that the first protrusion 411, the second protrusion 412, and the frame unit 210 are staggered along the height direction of the stator core 100.

It can be understood that, because the limiting arm 410 is connected to the boss 214 at an edge position, in the foregoing height direction, the second wire-retaining portion 414, the first protrusion 411, and the second protrusion 412 all protrude from the boss 214, and the first protrusion 411, the second protrusion 412, and the boss 214 are staggered, such that there is no other structure directly above and directly below the first protrusion 411, and there is no other structure directly above and directly below the second protrusion 412, which is convenient for the injection mold to be demolded in the up-down direction, simplifying the fabrication of the mold, and reducing the costs. Moreover, the first protrusion 411 and the second protrusion 412 adopt the layout structures in the foregoing embodiments, and cooperate with the first wire-retaining portion 413 and the second wire-retaining portion 414, to more stably limit the first wire segment 311 and the second wire segment 312 of the cross-over wire 310, thereby effectively preventing the cross-over wire 310 from being detached from the insulating frame 200.

With reference to FIG. 3, taking a leftmost frame unit 210 as an example, it can be understood that a second wire-retaining portion 414 of a limiting arm 410 on the frame unit 210 extends toward an adjacent frame unit 210, such that the second wire-retaining portion 414 may be close to a boss 214 of another frame unit 210, thereby facilitating routing of the cross-over wire 310 to the adjacent frame unit 210, and making the routing more stable.

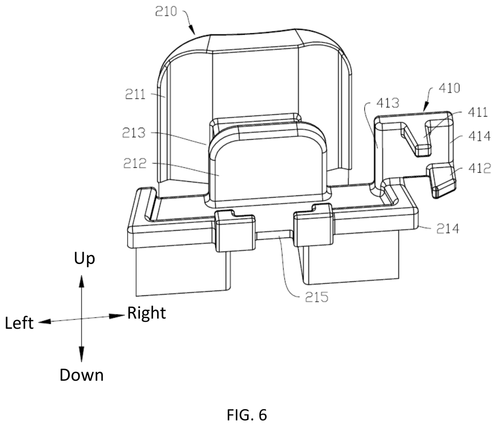

Referring to FIG. 6, in some embodiments, one end of the limiting arm 410 is provided with a first wire-retaining portion 413, the other end of the limiting arm 410 is provided with a second wire-retaining portion 414, the second wire-retaining portion 414 extends along the circumferential direction of the stator core 100, and the limiting arm 410 is provided with a first protrusion 411 and a second protrusion 412. The difference from the embodiment shown in FIG. 5 lies in that the first protrusion 411 is disposed at a central position of the upper end of the limiting arm 410, and the second protrusion 412 is disposed close to an edge of the second wire-retaining portion 414. This ensures that the first protrusion 411, the second protrusion 412, and the boss 214 are staggered along the height direction, thereby facilitating the demolding of the injection mold along the up-down direction. In addition, the position of the second protrusion 412 is lower, such that the second protrusion 412 may be closer to a boss 214 of an adjacent frame unit 210, thereby preventing the cross-over wire 310 from disengaging downwards from the second protrusion 412 and improving reliability.

An embodiment of the present disclosure provides an electric motor, which uses the stator assembly 1000 of the above embodiments. The specific electric motor is a three-phase electric motor suitable for a laundry machine. The electric motor further comprises other components such as a rotor and a bearing, and the three-phase electric motor has advantages of high power, stable operation, long service life, and the like, such that the laundry machine has a better washing effect.

Referring to FIG. 1 and FIG. 2, in the stator assembly 1000 of the embodiments, a segmented or striped stator core 100 is used. By arranging a limiting arm 410 on the insulating frame 200, when the stator assembly 1000 is rolled into an annular shape, a cross-over wire 310 may be rolled together with the stator core 100 through limitation by the limiting arm 410 to the cross-over wire 310. In this way, an arc radius of the cross-over wire 310 in a bent state may be increased, such that the cross-over wire 310 is maintained in tension, the cross-over wire 310 is not prone to being slack, and the cross-over wire 310 is not prone to detaching from the insulating frame 200. This improves stability of a winding 300, and allows an electric motor to operate more reliably.

Because the electric motor adopts all the technical schemes of the stator assembly 1000 in the foregoing embodiments, the electric motor has at least all the beneficial effects brought by the technical schemes of the foregoing embodiments. Details are not described herein again.

An embodiment of the present disclosure provides a washing apparatus, which may be a laundry machine or another washing electrical appliance, and the washing apparatus uses the electric motor of the foregoing embodiment. Taking a laundry machine as an example, the electric motor is mounted in the laundry machine and drives a drum of the laundry machine to operate, such that the laundry machine has a better washing effect.

Because the washing apparatus adopts all the technical schemes of the stator assembly 1000 in the foregoing embodiments, the washing apparatus has at least all the beneficial effects brought by the technical solutions of the foregoing embodiments. Details are not described herein again.

Although embodiments of the present disclosure are described in detail above with reference to the accompanying drawings, the present disclosure is not limited to the foregoing embodiments, and various changes can be made within the knowledge scope of those having ordinary skills in the art without departing from the scope of the present disclosure.

## Claims

1. A stator assembly, comprising:
a stator core;
an insulating frame disposed on the stator core; and
a multi-phase winding, wound around the insulating frame, wherein each phase of the winding comprises a plurality of coils disposed at an interval along a circumferential direction of the stator core, and the coils in each phase of the winding are interconnected by a cross-over wire extending along the circumferential direction of the stator core;
wherein the insulating frame is provided with a plurality of limiting portions disposed at an interval along the circumferential direction of the stator core and configured to limit the cross-over wire along a radial direction of the stator core.

2. The stator assembly of claim 1, wherein the plurality of limiting portions are a plurality of limiting arms formed on the insulating frame, an end of the limiting arm is connected to the insulating frame, an other end of the limiting arm is disposed along a height direction of the stator core, and a wall surface of the limiting arm facing away from the winding abuts against the cross-over wire.

3. The stator assembly of claim 2, wherein the wall surface is provided with a first protrusion, and the first protrusion is located at an end of the limiting arm distal from the insulating frame.

4. The stator assembly of claim 3, wherein the wall surface is provided with a second protrusion, the second protrusion is spaced apart from the first protrusion along a height direction of the limiting arm, and the cross-over wire is located between the first protrusion and the second protrusion.

5. The stator assembly of claim 4, wherein the first protrusion and the second protrusion are staggered along the height direction of the limiting arm.

6. The stator assembly of claim 4 or 5, wherein:
the end of the limiting arm connected to the insulating frame is provided with a first wire-retaining portion,
the other end of the limiting arm is provided with a second wire-retaining portion extending along the circumferential direction of the stator core,
an end of the cross-over wire is bent to form a first wire segment, an other end of the cross-over wire is bent to form a second wire segment, and
the first wire segment abuts against the first wire-retaining portion of one of the limiting arms, and the second wire segment abuts against the second wire-retaining portion of an other one of the limiting arms.

7. The stator assembly of claim 6, wherein at least one of the limiting arms is located between the first wire segment and the second wire segment to limit a wire portion between the first wire segment and the second wire segment.

8. The stator assembly of claim 6 or 7, wherein:
the insulating frame comprises a plurality of frame units disposed along the circumferential direction of the stator core,
each of the frame units is provided with the limiting arm,
the first protrusion and the second protrusion are disposed close to the second wire-retaining portion, and
the second wire-retaining portion is disposed toward an adjacent frame unit, such that the first protrusion, the second protrusion, and the frame unit are staggered along the height direction of the stator core.

9. The stator assembly of claim 8, wherein the frame unit is provided with a winding slot and a boss, wherein the boss (214) is located on a side of the frame unit away from the winding slot, and the limiting arm is connected to an end of the boss close to the winding slot.

10. The stator assembly of claim 9, wherein the insulating frame, the boss, and the limiting arm are integrally formed.

11. An electric motor, comprising a stator assembly according to any one of claims 1 to 10.

12. A washing apparatus, comprising an electric motor of claim 11.
